# EUROPEAN PATENT SPECIFICATION

(11) **EP 1 859 854 B1**
(45) Date of publication and mention of the grant of the patent: **12.03.2008**
(21) Application number: 06010068.2
(22) Date of filing: 16.05.2006
(51) Int. Cl.: B01D 65/00, B01D 63/08, B01D 29/41, B01D 65/04

(54) **Filter disks with bayonet type connection means**
Filterscheiben mit Bajonettverbindung
Disques de filtrage avec coupleur de type bayonette

(43) Date of publication of application: 28.11.2007
(73) Proprietor: Kuo, Chi-Chang, Hsi Dist., Taichung City (TW)
(72) Inventor: Kuo, Yu-San, Hsi Dist., Taichung City (TW)
(74) Representative: Becker, Eberhard

(56) References cited:
- EP-A1- 0 542 678
- EP-A2- 1 374 980
- DE-A1- 4 447 211
- DE-C2- 19 949 613
- GB-A- 1 286 875
- US-A- 3 259 248
- US-A- 3 643 806

## Description

### BACKGROUND

### Field of Invention

The present invention relates to a filtering device, and more particularly to a filtering device including a plurality of positioning trays sleeved around a fluid-collecting tube and a plurality of membranes alternating with the positioning trays.

### Description of Related Art

Conventional filtering devices normally include a plurality of frames and membranes that are assembled together. The fluid to be filtered enters one end of the assembly of the framed membranes, and is discharged from an opposite end of the assembly of the framed membranes. Assembly of the framed membranes is required to be very careful so as to prevent leakage from occurring during filtering operation. As a consequence, assembly of the frames and the membranes of the conventional filtering device in a manner to prevent leakage from occurring is relatively difficult to achieve.

DE-A-44 47 211 discloses a filter device with a plurality of positioning trays which support membranes in between, the trays sleeved around a filtrate collection tube.

US-A-3 259 248 discloses a snap fit connection of two adjacent trays via snap-fit connectors.

EP-A-1 374 980 discloses bayonet type connection means for mounting two partial trays together and further to mount the tray to the shaft.

DE-A-199 49 613 refers to a stack of trays sleeved to a shaft, wherein each tray has portions which engage with an external mounting tool due to a tangential movement in a bayonet type manner. The trays are not interconnected.

Hence, there is a need to design a filtering device that is easy to assemble without causing leakage.

### SUMMARY

Therefore, the main object of the present invention is to provide a filtering device that can overcome the aforesaid drawback associated with the prior art.

Accordingly, a filtering device of this invention comprises: a fluid-collecting tube defining a fluid channel therein and formed with a plurality of apertures that are in fluid communication with the fluid channel; a plurality of positioning trays sleeved around the fluid-collecting tube and stacked one above the other; and a plurality of membranes alternating with the positioning trays and disposed around the fluid-collecting tube. Each of the membranes is sandwiched between an adjacent pair of the positioning trays. Each of the positioning trays includes an annular plate that is sleeved around the fluid-collecting tube and that is formed with a plurality of annularly displaced arcuate holes around the fluid-collecting tube. Each of the arcuate holes has opposite first and second ends. The annular plate of each of the positioning trays is provided with a plurality of first engaging members, each of which is disposed adjacent to the first end of a respective one of the arcuate holes, and a plurality of second engaging members, each of which is disposed adjacent to the second engaging end of a respective one of the arcuate holes. The annular plates of each adjacent pair of the positioning trays are coupled to each other and are rotatable relative to each other between a first relative position and a second relative position offset from the first relative position. The first engaging member of one of the annular plates of each adjacent pair of the positioning trays is disengaged from the second engaging member of the other of the annular plates of each adjacent pair of the positioning trays when the annular plates of each adjacent pair of the positioning trays are disposed at the first relative position. The first engaging member of said one of the annular plates of each adjacent pair of the positioning trays engages releasably the second engaging member of the other of the annular plates of each adjacent pair of the positioning trays when the annular plates of each adjacent pair of the positioning trays are disposed at the second relative position.

### BRIEF DESCRIPTION OF THE DRAWINGS

Other features and advantages of the present invention will become apparent in the following detailed description of the preferred embodiments with reference to the accompanying drawings, of which:
Fig. 1 is a fragmentary exploded perspective view of the first preferred embodiment of the filtering device according to the present invention;
Fig. 2 is an exploded perspective view of an assembly of a membrane, a stirring member, and an adjacent pair of positioning trays of the first preferred embodiment;
Fig. 3 is a fragmentary sectional view of an assembly of the membranes, the stirring members, and the positioning trays of the first preferred embodiment;
Fig. 4 is a schematic top view to illustrate a state where an adjacent pair of the positioning trays of the first preferred embodiment are disposed at a first relative position;
Fig. 5 is a schematic top view to illustrate another state where an adjacent pair of the positioning trays of the first preferred embodiment are disposed at a second relative position; and
Fig. 6 is fragmentary sectional view of an adjacent pair of the positioning trays of the positioning trays of the filtering device of the second preferred embodiment according to the present invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

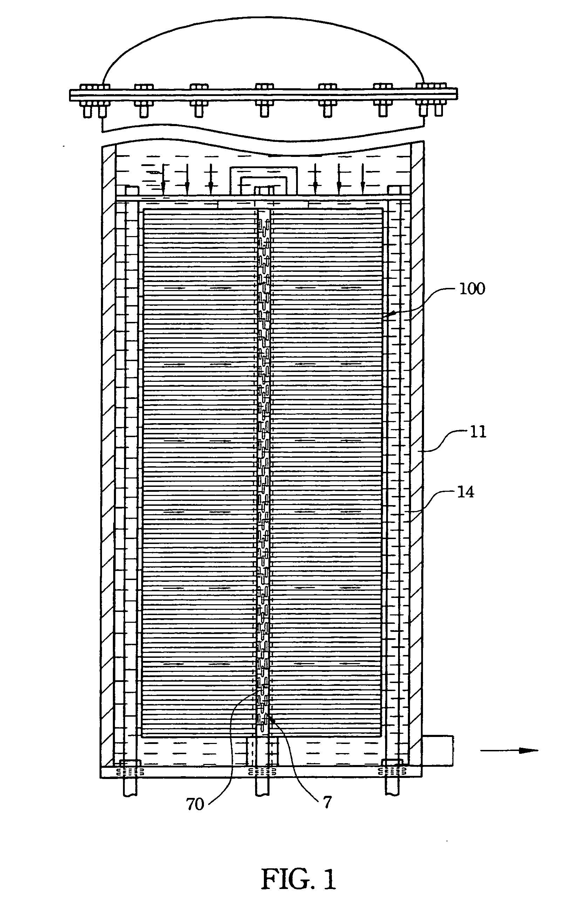

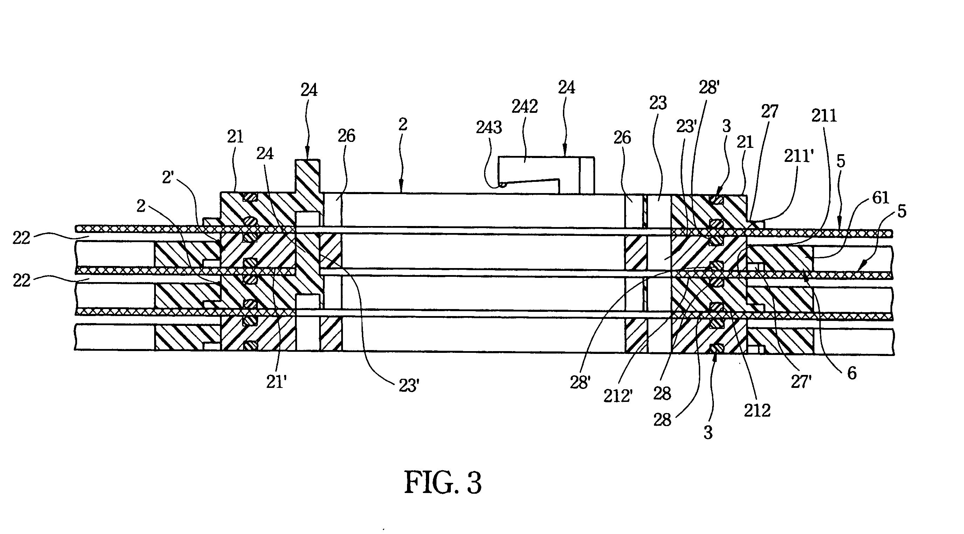

Referring to Figure 1 to 4, the first preferred embodiment of a filtering device according to the present invention is shown to include a column 11 with a fluid inlet (not shown) and a fluid outlet, and a filtering unit 100 mounted in the column 11. Several water-injecting tubes 14 are mounted in the column 11 for cleaning purpose.

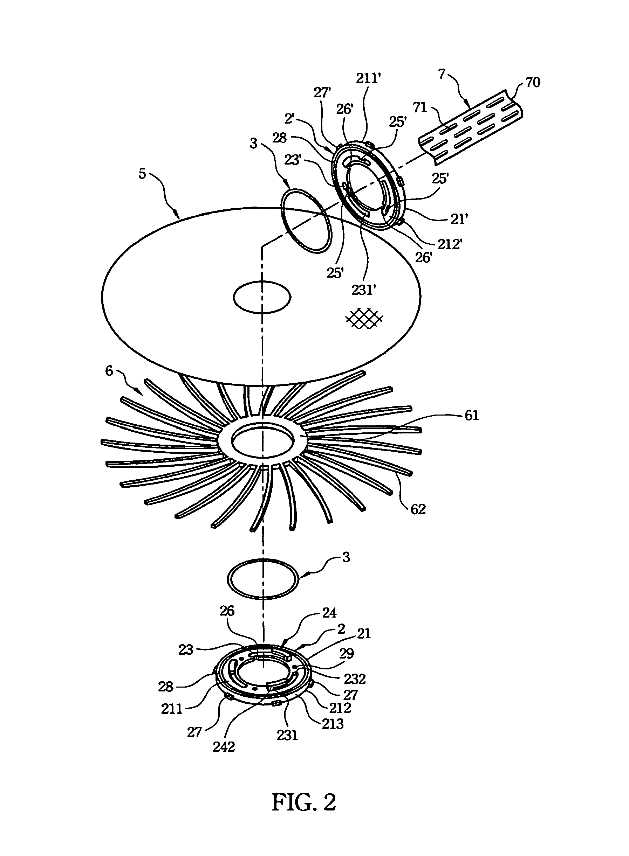

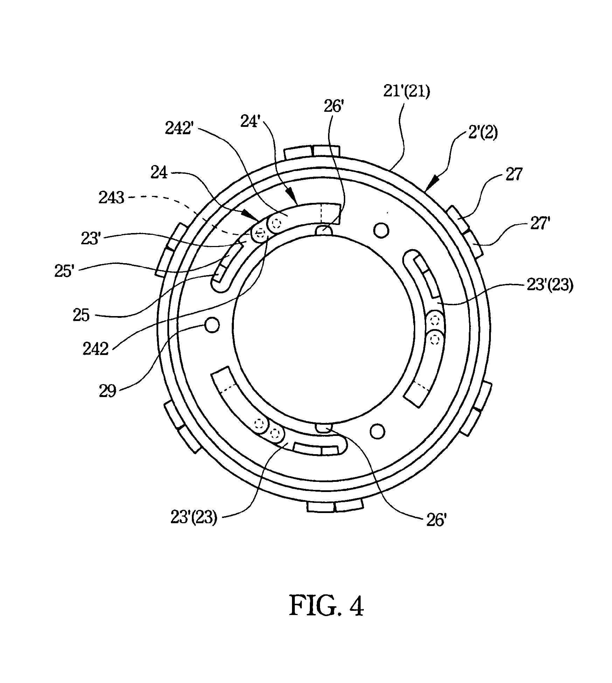

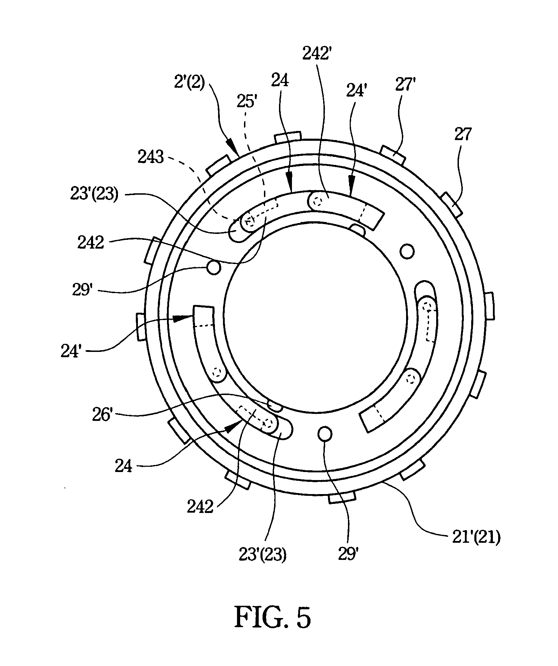

The filtering unit 100 includes: a fluid-collecting tube 7 defining a fluid channel 70 therein and formed with a plurality of apertures 71 (see Fig. 2) that are in fluid communication with the fluid channel 70; a plurality of positioning trays 2 (2') (the reference numerals for each two adjacent ones of the positioning trays are respectively numbered 2 and 2' for the sake of clarity in the following description) sleeved around the fluid-collecting tube 7 and stacked one above the other; and a plurality of membranes 5 alternating with the positioning trays 2 (2') and disposed around the fluid-collecting tube 7. Each of the membranes 5 is sandwiched between an adjacent pair of the positioning trays 2,2'. Each of the positioning trays 2(2') includes an annular plate 21(21') that is sleeved around the fluid-collecting tube 7 and that is formed with a plurality of annularly displaced arcuate holes 23(23') around the fluid-collecting tube 7. Each of the arcuate holes 23(23') has opposite first and second ends 231, 232(231', 232'). The annular plate 21 (21') of each of the positioning trays 2(2') is provided with a plurality first engaging members 24(24'), each of which is disposed adjacent to the first end 231(231') of a respective one of the arcuate holes 23(23'), and a plurality of second engaging members 25(25'), each of which is disposed adjacent to the second end 232(232') of a respective one of the arcuate holes 23(23'). The annular plates 21, 21' of each adjacent pair of the positioning trays 2, 2' are coupled to each other and are rotatable relative to each other between a first relative position and a second relative position offset from the first relative position. The first engaging member 24 of one of the annular plates 21 of each adjacent pair of the positioning trays 2, 2' is disengaged from the second engaging member 25' of the other of the annular plates 21' of each adjacent pair of the positioning trays 2, 2' when the annular ptates21, 21' of each adjacent pair of the positioning trays 2, 2' are disposed at the first relative position, as best shown in Figure 4. The first engaging member 24 of said one of the annular plate 21 of each adjacent pair of the positioning trays 2, 2' engages releasably the second engaging member25' of the other of the annular plates 21' of each adjacent pair of the positioning trays 2, 2' when the annular plates 21, 21' of each adjacent pair of the positioning trays 2, 2' are disposed at the second relative position, as best shown in Figure 5.

In this embodiment, the first engaging member 24 of said one of the annular plates 21 of each adjacent pair of the positioning trays 2, 2' is angularly offset from the second engaging member 25' of the other of the annular plates 21' of each adjacent pair of the positioning trays 2, 2' when the annular plates 21, 21' of each adjacent pair of the positioning trays 2, 2' are disposed at the first relative position, thereby permitting disassembly of the adjacent pair of the positioning trays 2, 2'. The first engaging member 24 of said one of the annular plates 21 of each adjacent pair of the positioning trays 2, 2' is axially aligned with the second engaging member 25' of the other of the annular plates 21' of each adjacent pair of the positioning trays 2, 2' when the annular plates 21, 21' of each adjacent pair of the positioning trays 2, 2' are disposed at the second relative position, thereby preventing disassembly of the adjacent pair of the positioning trays 2, 2'.

Preferably, the annular plate 21 (21') of each of the positioning trays 2 (2') is formed with a plurality of first arcuate protrusions, each of which defines a respective one of the first engaging members 24 (24') and each of which projects axially and outwardly therefrom, and a plurality of second arcuate protrusions, each of which defines a respective one of the second engaging members 25 (25') and each of which projects therefrom into a respective one of the arcuate holes 23 (23') in the annular plate 21 (21') of the respective one of the positioning trays 2 (2'). Each of the first arcuate protrusions of said one of the annular plates 21 of each adjacent pair of the positioning trays 2, 2' extends through a respective one of the arcuate holes 23' in the other of the annular plates 21' of each adjacent pair of the positioning trays 2, 2'.

Preferably, each of the first arcuate protrusions of the annular plate 21 (21') of each of the positioning trays 2 (2') has an inverted L-shape, projects axially from a periphery of the first end 231 (231') of the respective one of the arcuate holes 23 (23'), and has a free end portion 242 (242') extending toward the second end 232 (232') of the respective one of the arcuate holes 23 (23'). Each of the second arcuate protrusions of the annular plate 21 (21') of each of the positioning trays 2 (2') projects radially and inwardly from a hole-defining wall of the respective one of the arcuate holes 23 (23'). The free end portion 242 of each of the first arcuate protrusions of said one of the annular plates 21 of each adjacent pair of the positioning trays 2 is axially aligned with the respective one of the second arcuate protrusions (25') of the other of the annular plates 21' of each adjacent pair of the positioning trays 2, 2' when the annular plates 21, 21' of each adjacent pair of the positioning trays 2, 2' are disposed at the second relative position, and is offset from the respective one of the second arcuate protrusions (25') of the other of the annular plates 21' of each adjacent pair of the positioning trays 2, 2' when the annular plates 21, 21' of each adjacent pair of the positioning trays 2, 2' are disposed at the first relative position.

Preferably, the free end portion 242 (242') of each of the first arcuate protrusions of eah of the annular plates 21 (21') is further formed with a protrusion 243 (243') such that the protrusion 243 of each of the first arcuate protrusions of said one of the annular plates 21 of each adjacent pair of the positioning trays 2, 2' abuts against a corner of the respective one of the second arcuate protrusions 25' of the other of the annular plate 21' of each adjacent pair of the positioning trays 2, 2' when the annular plates 21, 21' of each adjacent pair of the positioning trays 2, 2' are disposed at the second relative position, as best shown in Figure 5 .

The annular plate 21 (21') of each of the positioning trays 2 (2') has upper and lower surfaces 211, 212 (211', 212') and is further formed with upper and lower annular recesses 28 (28') indented inwardly and respectively from the upper and lower surfaces 211, 212 (211', 212'). The filtering device further includes upper and lower sealing rings 3 that are respectively disposed in the upper and lower annular recesses 28 (28') in the annular plate 21 (21') of each of the positioning trays 2 (2") and that are respectively in sealing contact with an adjacent pair of the membranes 5.

In this embodiment, the annular plate 21 (21') of each of the positioning trays 2 (2') has a peripheral edge 213 (213') formed with a plurality of retaining tabs 27 (27'). Each two adjacent one of the membranes 5 cooperatively define a gap 22 therebetween. The filtering device further includes a plurality of stirring members 6, each of which is disposed in the gap 22 between two adjacent ones of the membranes 5 and each of which has a ring-shaped hub 61 rotatably sleeved on the anular plate 21 (21') of a respective one of the positioning trays 2 (2'), and a plurality of blades 62 extending outwardly and curvedly from the ring-shaped hub 61. Preferably, the annular plate 21 (21') of each of the positioning trays 2 (2') is further formed with a plurality of accessing holes 29 (29") for facilitating detachment of each adjacent pair of the positioning trays 2, 2'.

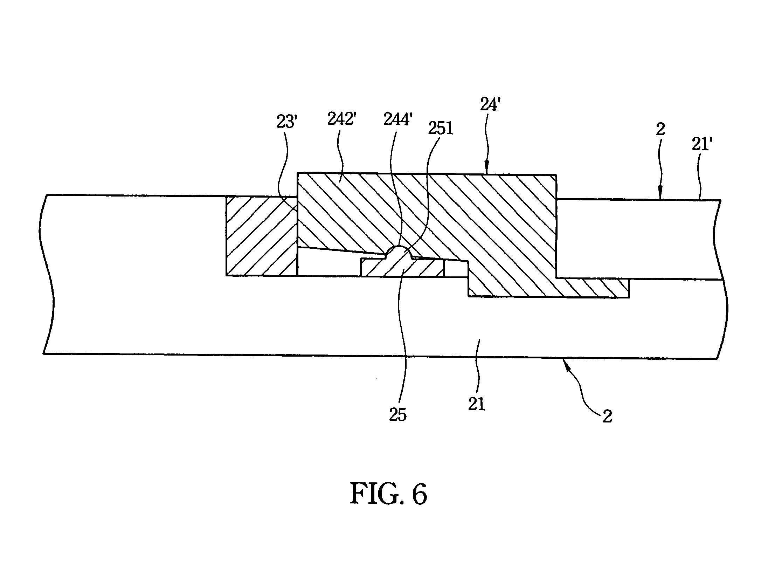

Referring to Figure 6, the second preferred embodiment of the filtering device of this invention differs from the previous embodiment in that the free end portion 242' of each of the first arcuate protrusions of the annular plate 21' of each of the positioning trays 2' is formed with a retaining groove 244'. Each of the second arcuate protrusions of the annular plate 21 of each of the positioning trays 2 is formed with a tongue 251. The tongue 251 of each of the second arcuate protrusions of said one of the annular plates 21 of each adjacent pair of the positioning trays 2, 2' engages the retaining groove 244' in the free end portion 242' of the respective one of the first arcuate protrusions of the other of the annular plates 21' of each adjacent pair of the positioning trays 2, 2' when the annular plates 21, 21' of each adjacent pair of the positioning trays 2, 2' are disposed at the second relative position.

With the inclusion of the positioning trays 2 (2') in the filtering device of this invention, the aforesaid drawback associated with the prior art can be mitigated.

## Claims

1. A filtering device comprising:
a fluid-collecting tube (7) defining a fluid channel (70) therein and formed with a plurality of apertures (71) that are in fluid communication with said fluid channel (70) ;
a plurality of positioning trays (2) sleeved around said fluid-collecting tube (7) and stacked one above the other; and
a plurality of membranes (5) alternating with said positioning trays (2) and disposed around said fluid-collecting tube (7), each of said membranes (5) being sandwiched between an adjacent pair of said positioning trays (2);
wherein each of said positioning trays (2) includes an annular plate (21) that is sleeved around said fluid-collecting tube (7) and that is formed with a plurality of annularly displaced arcuate holes (23) around said fluid-collecting tube (7), each of said arcuate holes (23) having opposite first and second ends (231, 232), said annular plate (21) of each of said positioning trays (2) being provided with a plurality of first engaging members (24), each of which is disposed adjacent to said first end (231) of a respective one of said arcuate holes (23), and a plurality of second engaging members (25), each of which is disposed adjacent to said second end (232) of a respective one of said arcuate holes (23);
wherein said annular plates (21) of each adjacent pair of said positioning trays (2) are coupled to each other and are rotatable relative to each other between a first relative position and a second relative position offset from the first relative position; and
wherein said first engaging member (24) of one of said annular plates (21) of each adjacent pair of said positioning trays (2) is disengaged from said second engaging member (25) of the other of said annular plates (21) of each adjacent pair of said positioning trays (2) when said annular plates (21) of each adjacent pair of said positioning trays (2) are disposed at the first relative position, and said first engaging member (24) of said one of said annular plates (21) of each adjacent pair of said positioning trays (2) engages releasably said second engaging member (25) of the other of said annular plates (21) of each adjacent pair of said positioning trays (2) when said annular plates (21) of each adjacent pair of said positioning trays (2) are disposed at the second relative position.

2. The filtering device as claimed in claim 1, wherein said first engaging member (24) of said one of said annular plates (21) of each adjacent pair of said positioning trays (2) is angularly offset from said second engaging member (25) of the other of said annular plates (21) of each adjacent pair of said positioning trays (2) when said annular plates (21) of each adjacent pair of said positioning trays (2) are disposed at the first relative position, and said first engaging member (24) of said one of said annular plates (21) of each adjacent pair of said positioning trays (2) is axially aligned with said second engaging member (25) of the other of said annular plates (21) of each adjacent pair of said positioning trays (2) when said annular plates (21) of each adjacent pair of said positioning trays (2) are disposed at the second relative position.

3. The filtering device as claimed in claim 2, wherein said annular plate (21) of each of said positioning trays (2) is formed with a plurality of first arcuate protrusions, each of which defines a respective one of said first engaging members (24) and each of which projects axially and outwardly therefrom, said annular plate (21) of each of said positioning trays (2) being further formed with a plurality of second arcuate protrusions, each of which defines a respective one of said second engaging members (25) and each of which projects therefrom into a respective one of said arcuate holes (23) in said annular plate (21) of the respective one of said positioning trays (2), each of said first arcuate protrusions of one of said annular plates (21) of each adjacent pair of said positioning trays (2) extending through a respective one of said arcuate holes (23) in the other of said annular plates (21) of each adjacent pair of said positioning trays (2).

4. The filtering device as claimed in claim 3, wherein each of said first arcuate protrusions of said annular plate (21) of each of said positioning trays (2) has an inverted L-shape, projects axially from periphery of said first end (231) of the respective one of said arcuate holes (23), and has a free end portion (242) extending toward said second end (232) of the respective one of said arcuate holes (23), each of said arcuate holes (23) being defined by a hole-defining wall, each of said second arcuate protrusions of said annular plate (21) of each of said positioning trays (2) projecting radially and inwardly from said hole-defining wall of the respective one of said arcuate holes (23), said free end portion (242) of each of said first arcuate protrusions of said one of said annular plates (21) of each adjacent pair of said positioning trays (2) being axially aligned with the respective one of said second arcuate protrusions of the other of said annular plates (21) of each adjacent pair of said positioning trays (2) when said annular plates (21) of each adjacent pair of said positioning trays (2) are disposed at the second relative position, and being offset from the respective one of said second arcuate protrusions of the other of said annular plates (21) of each adjacent pair of said positioning trays (2) when said annular plates (21) of each adjacent pair of said positioning trays (2) are disposed at the first relative position.

5. The filtering device as claimed in claim 4, wherein said free end portion (242) of each of said first arcuate protrusions of said annular plate (21) of each of said positioning trays (2) is formed with a retaining groove (244'), each of said second arcuate protrusions of said annular plate (21) of each of said positioning trays (2) being formed with a tongue (251), said tongue (251) of each of said second arcuate protrusions of one of said annular plates (21) of each adjacent pair of said positioning trays (2) engaging said retaining groove (244') in said free end portion (242) of the respective one of said first arcuate protrusions of the other of said annular plates (21) of each adjacent pair of said positioning trays (2) when said annular plates (21) of each adjacent pair of said positioning trays (2) are disposed at the second relative position.

6. The filtering device as claimed in claim 1, wherein said annular plate (21) of each of said positioning trays (2) has upper and lower surface (211, 212), and is further formed with upper and lower annular recesses (28) indented inwardly and respectively from said upper and lower surface (211, 212), said filtering device further comprising upper and lower sealing rings (3) that are respectively disposed in said upper and lower annular recesses (28) in said annular plate (21) of each of said positioning trays (2) and that are respectively in sealing contact with an adjacent pair of said membranes (5).

7. The filtering device as claimed in claim 1, wherein each two adjacent ones of said membranes (5) cooperatively define a gap (22) therebetween, said filtering device further comprising a plurality of stirring members (6), each of which is disposed in said gap (22) between two adjacent ones of said membranes (5) and each of which had a hub (61) rotatably sleeved on said annular plate (21) of a respective one of said positioning trays (2), and a plurality of blades (62) extending outwardly and curvedly from said hub (61).

## Patentansprüche

1. Filtervorrichtung, umfassend:
ein Fluidsammelrohr (7), das einen Fluidkanal (70) darin definiert und mit einer Vielzahl von Durchlässen (71) gebildet ist, die in Fluidverbindung mit dem Fluidkanal (70) stehen;
eine Vielzahl von Positionierungseinsätzen (2), welche das Fluidsammelrohr (7) umhüllen und übereinander gestapelt sind; und
eine Vielzahl von Membranen (5), die sich mit den Positionierungseinsätzen (2) abwechseln und um das Fluidsammelrohr (7) herum angeordnet sind, wobei jede Membran (5) zwischen einem benachbarten Paar der Positionierungseinsätze (2) eingeschlossen ist;
wobei jeder Positionierungseinsatz (2) eine ringförmige Platte (21) beinhaltet, welche das Fluidsammelrohr (7) umhüllt und die mit einer Vielzahl von ringförmig platzierten bogenförmigen Löchern (23) um das Fluidsammelrohr (7) herum gebildet ist, wobei jedes bogenförmige Loch (23) gegenüberliegende erste und zweite Enden (231, 232) aufweist, wobei die ringförmige Platte (21) der Positionierungseinsätze (2) mit einer Vielzahl von ersten Eingreifelementen (24) versehen ist, wobei jedes davon neben dem ersten Ende (231) eines entsprechenden bogenförmigen Lochs (23) angeordnet ist, und eine Vielzahl von zweiten Eingreifelementen (25) von denen jedes neben dem zweiten Ende (232) eines entsprechenden bogenförmigen Lochs (23) angeordnet ist;
wobei die ringförmigen Platten (21) jedes benachbarten Paares der Positionierungseinsätze (2) miteinander gekoppelt sind und drehbar bezüglich einander zwischen einer ersten relativen Position und einer zweiten relativen Position versetzt von der ersten relativen Position sind; und
wobei das erste Eingreifelement (24) einer der ringförmigen Platten (21) jedes benachbarten Paares der Positionierungseinsätze (2) von dem zweiten Eingreifelement (25) der anderen ringförmigen Platte (21) jedes benachbarten Paares der Positionierungseinsätze (2) entkoppelt ist, wenn die ringförmigen Platten (21) jedes benachbarten Paares der Positionierungseinsätze (2) an der ersten relativen Position angeordnet sind, und das erste Eingreifelement (24) von dieser ringförmigen Platte (21) jedes benachbarten Paares der Positionierungseinsätze (2) lösbar mit dem zweiten Eingreifelement (25) der anderen ringförmigen Platte (21) jedes benachbarten Paares der Positionierungseinsätze (2) in Eingriff steht, wenn die ringförmigen Platten (21) jedes benachbarten Paares der Positionierungseinsätze (2) in der zweiten relativen Position angeordnet sind.

2. Filtervorrichtung gemäß Anspruch 1, wobei das erste Eingreifelement (24) dieser ringförmigen Platte (21) jedes benachbarten Paares der Positionierungseinsätze (2) um einen Winkel zu dem zweiten Eingreifelement (25) der anderen ringförmigen Platte (21) jedes benachbarten Paares der Positionierungseinsätze (2) versetzt ist, wenn die ringförmigen Platten (21) jedes benachbarten Paares der Positionierungseinsätze (2) in der ersten relativen Position angeordnet sind, und das erste Eingreifelement (24) dieser ringförmigen Platte (21) jedes benachbarten Paares der Positionierungseinsätze (2) axial mit dem zweiten Eingreifelement (25) der anderen ringförmigen Platte (21) jedes benachbarten Paares der Positionierungseinsätze (2) ausgerichtet ist, wenn die ringförmigen Platten (21) jedes benachbarten Paares der Positionierungseinsätze (2) in der zweiten relativen Position angeordnet sind.

3. Filtervorrichtung gemäß Anspruch 2, wobei die ringförmige Platte (21) jedes Positionierungseinsatzes (2) mit einer Vielzahl von ersten bogenförmigen Vorsprüngen gebildet ist, von denen jeder ein entsprechendes der ersten Eingreifelemente (24) definiert und wobei jedes davon axial und davon nach Außen gerichtet hervorsteht, wobei die ringförmige Platte (21) jedes Positionierungseinsatzes (2) des Weiteren mit einer Vielzahl von zweiten bogenförmigen Vorsprüngen gebildet ist, von denen jeder ein entsprechendes der zweiten Eingreifelemente (25) definiert und wobei jedes davon in ein entsprechendes bogenförmiges Loch (23) in der ringförmigen Platte (21) des entsprechenden Positionierungseinsatzes (2) hineinragt, wobei jeder der ersten bogenförmigen Vorsprünge einer ringförmigen Platte (21) jedes benachbarten Paares der Positionierungseinsätze (2) sich durch ein entsprechendes bogenförmiges Loch (23) in der anderen ringförmigen Platte (21) jedes benachbarten Paares der Positionierungseinsätze (2) erstreckt.

4. Filtervorrichtung gemäß Anspruch 3, wobei jeder ersten bogenförmigen Vorsprünge der ringförmigen Platte (21) jedes Positionierungseinsatzes (2) die Form eines invertierten L aufweist, axial aus der Umgebung des ersten Endes (231) des entsprechenden ersten bogenförmigen Lochs (23) hervorragt, und einen freien Endteil (242) aufweist, der sich dem zweiten Ende (232) des entsprechenden bogenförmigen Lochs (23) entgegen erstreckt, wobei jedes der bogenförmigen Löcher (23) durch eine lochdefinierende Wand definiert ist, wobei jeder der zweiten bogenförmigen Vorsprünge der ringförmigen Platte (21) der Positionierungseinsätze (2) radial und nach Innen von der lochdefinierenden Wand des entsprechenden bogenförmigen Lochs (23) hervorragt, wobei der freie Endteil (242) jedes der ersten bogenförmigen Vorsprünge dieser ringförmigen Platte (21) von jedem benachbarten Paar der Positionierungseinsätze (2) axial mit dem entsprechenden der zweiten bogenförmigen Vorsprünge der anderen ringförmigen Platte (21) jedes benachbarten Paares der Positionierungseinsätze (2) ausgerichtet ist, wenn die ringförmigen Platten (21) jedes benachbarten Paares der Positionierungseinsätze (2) an der zweiten relativen Position angeordnet sind und von der entsprechenden der zweiten bogenförmigen Vorsprünge der anderen ringförmigen Platte (21) jedes benachbarten Paares der Positionierungseinsätze (2) versetzt sind, wenn die ringförmigen Platten (21) jedes benachbarten Paares der Positionierungseinsätze (2) in der ersten relativen Position angeordnet sind.

5. Filtervorrichtung gemäß Anspruch 4, wobei der freie Endteil (242) jedes der ersten bogenförmigen Vorsprünge der ringförmigen Platte (21) jedes Positionierungseinsatzes (2) mit einer Haltenut (244') gebildet ist, wobei jeder der zweiten bogenförmigen Vorsprünge der ringförmigen Platte (21) jedes Positionierungseinsatzes (2) mit einer Feder (251) gebildet ist, wobei die Feder (251) jedes der zweiten bogenförmigen Vorsprünge einer bogenförmigen Platte (21) jedes benachbarten Positionierungseinsatzes (2) in Eingriff mit der Haltenut (244') in dem freien Endteil (242) des entsprechenden der ersten bogenförmigen Vorsprünge der anderen ringförmigen Platte (21) jedes benachbarten Paares der Positionierungseinsätze (2) steht, wenn die ringförmigen Platten (21) jedes benachbarten Paares der Positionierungseinsätze (2) in der zweiten relativen Position angeordnet sind.

6. Filtervorrichtung gemäß Anspruch 1, wobei die ringförmige Platte (21) jedes Positionierungseinsatzes (2) eine obere und untere Fläche (211, 212) aufweist, und des Weiteren mit oberen und unteren ringförmigen Aussparungen (28) gebildet ist, die nach Innen und jeweils von der oberen und unteren Fläche (211, 212) eingekerbt sind, wobei die Filtervorrichtung des Weiteren obere und untere Dichtringe (3) umfasst, die jeweils in den oberen und unteren ringförmigen Aussparungen (28) in der ringförmigen Platte (21) jedes Positionierungseinsatzes (2) angeordnet sind, und die jeweils in abdichtenden Kontakt mit einem benachbarten Paar der Membranen (5) stehen.

7. Filtervorrichtung gemäß Anspruch 1, wobei beide benachbarten Membranen (5) zusammenwirkend eine Lücke (22) dazwischen bilden, wobei die Filtervorrichtung des Weiteren eine Vielzahl von Mischelementen (6) umfasst, wobei jedes in dieser Lücke (22) zwischen zwei benachbarten Membranen (5) angeordnet ist und jedes davon eine Nabe (61) aufweist, die drehbar auf der ringförmigen Platte (21) eines entsprechenden Positionierungseinsatzes (2) angebracht ist, und eine Vielzahl von Schaufeln (62) aufweist, die sich nach außen und gekrümmt von der Nabe (61) erstrecken.

## Revendications

1. Dispositif de filtrage comprenant :
un tube de collecte de fluide (7) définissant un canal de fluide (70) à l'intérieur de celui-ci et formé avec une pluralité d'ouvertures (71) qui sont en communication de fluide avec ledit canal de fluide (70) ;
une pluralité de plateaux de positionnement (2) raccordés par manchon autour dudit tube de collecte de fluide (7) et empilés les uns sur les autres ; et
une pluralité de membranes (5) alternée avec lesdits plateaux de positionnement (2) et disposée autour dudit tube de collecte de fluide (7), chacune desdites membranes (5) étant prise en sandwich entre une paire adjacente desdits plateaux de positionnement (2) ;
dans lequel chacun desdits plateaux de positionnement (2) comprend une plaque annulaire (21) qui est reliée par manchon autour dudit tube de collecte de fluide (7) et qui est formée avec une pluralité de trous arqués (23) déplacés de manière annulaire autour dudit tube de collecte de fluide (7), chacun desdits trous arqués (23) ayant des première et seconde extrémités opposées (231, 232), ladite plaque annulaire (21) de chacun desdits plateaux de positionnement (2) étant dotée d'une pluralité de premiers éléments de mise en prise (24) dont chacun est disposé de manière adjacente à ladite première extrémité (231) d'un trou respectif dudit trou arqué (23), et une pluralité de seconds éléments de mise en prise (25), dont chacun est disposé de manière adjacente à ladite seconde extrémité (232) d'un trou respectif desdits trous arqués (23) ;
dans lequel lesdites plaques annulaires (21) de chaque paire adjacente desdits plateaux de positionnement (2) sont couplées entre elles et peuvent tourner les unes par rapport aux autres entre une première position relative et une seconde position relative décalée par rapport à la première position relative ; et
dans lequel ledit premier élément de mise en prise (24) de l'une desdites plaques annulaires (21) de chaque paire adjacente desdits plateaux de positionnement (2) est dégagé dudit second élément de mise en prise (25) de l'autre desdites plaques annulaires (21) de chaque paire adjacente desdits plateaux de positionnement (2) lorsque lesdites plaques annulaires (21) de chaque paire adjacente desdits plateaux de positionnement (2) sont disposées à la première position relative, et ledit premier élément de mise en prise (24) de ladite une desdites plaques annulaires (21) de chaque paire adjacente desdits plateaux de positionnement (2) met en prise de manière amovible ledit second élément de mise en prise (25) de l'autre desdites plaques annulaires (21) de chaque paire adjacente desdits plateaux de positionnement (2) lorsque lesdites plaques annulaires (21) de chaque paire adjacente desdits plateaux de positionnement (2) sont disposées à la seconde position relative.

2. Dispositif de filtrage selon la revendication 1, dans lequel ledit premier élément de mise en prise (24) de ladite une desdites plaques annulaires (21) de chaque paire adjacente desdits plateaux de positionnement (2) est décalé de manière angulaire par rapport audit second élément de mise en prise (25) de l'autre desdites plaques annulaires (21) de chaque paire adjacente desdits plateaux de positionnement (2) lorsque lesdites plaques annulaires (21) de chaque paire adjacente desdits plateaux de positionnement (2) sont disposées à la première position relative, et ledit premier élément de mise en prise (24) de ladite une desdites plaques annulaires (21) de chaque paire adjacente desdits plateaux de positionnement (2) est axialement aligné avec ledit second élément de mise en prise (25) de l'autre desdites plaques annulaires (21) de chaque paire adjacente desdits plateaux de positionnement (2) lorsque lesdites plaques annulaires (21) de chaque paire adjacente desdits plateaux de positionnement (2) sont disposées à la seconde position relative.

3. Dispositif de filtrage selon la revendication 2, dans lequel ladite plaque annulaire (21) de chacun desdits plateaux de positionnement (2) est formée avec une pluralité de premières saillies arquées, dont chacune définit un élément respectif desdits premiers éléments de mise en prise (24) et dont chacune fait saillie de manière axiale et vers l'extérieur à partir de ceux-ci, ladite plaque annulaire (21) de chacun desdits plateaux de positionnement (2) étant en outre formé avec une pluralité de secondes saillies arquées, dont chacune définit un élément respectif desdits seconds éléments de mise en prise (25) et dont chacun fait saillie à partir de ceux-ci dans un trou respectif desdits trous arqués (23) dans ladite plaque annulaire (21) du plateau respectif desdits plateaux de positionnement (2), chacune desdites premières saillies arquées de l'une desdites plaques annulaires (21) de chaque paire adjacente desdits plateaux de positionnement (2) s'étendant à travers un trou respectif desdits trous arqués (23) dans l'autre desdites plaques annulaires (21) de chaque paire adjacente desdits plateaux de positionnement (2).

4. Dispositif de filtrage selon la revendication 3, dans lequel chacune desdites premières saillies arquées de ladite plaque annulaire (21) de chacun desdits plateaux de positionnement (2) a une forme de L inversé, fait saillie de manière axiale à partir de la périphérie de ladite première extrémité (231) du trou respectif desdits trous arqués (23), et a une partie d'extrémité libre (242) s'étendant vers ladite seconde extrémité (232) du trou respectif desdits trous arqués (23), chacun desdits trous arqués (23) étant défini par une paroi de définition de trou, chacune desdites secondes saillies arquées de ladite plaque annulaire (21) de chacun desdits plateaux de positionnement (2) faisant saillie radialement et vers l'intérieur à partir de ladite paroi de définition de trou du trou respectif desdits trous arqués (23), ladite partie d'extrémité libre (242) de chacune desdites premières saillies arquées de ladite une desdites plaques annulaires (21) de chaque paire adjacente desdits plateaux de positionnement (2) étant axialement alignée avec la saillie respective desdites secondes saillies arquées de l'autre desdites plaques annulaires (21) de chaque paire adjacente desdits plateaux de positionnement (2) lorsque lesdites plaques annulaires (21) de chaque paire adjacente desdits plateaux de positionnement (2) sont disposées à la seconde position relative et étant décalées par rapport à la saillie respective desdites secondes saillies arquées de l'autre desdites plaques annulaires (21) de chaque paire adjacente desdits plateaux de positionnement (2) lorsque lesdites plaques annulaires (21) de chaque paire adjacente desdits plateaux de positionnement (2) sont disposées à la première position relative.

5. Dispositif de filtrage selon la revendication 4, dans lequel ladite partie d'extrémité libre (242) de chacune desdites premières saillies arquées de ladite plaque annulaire (21) de chacun desdits plateaux de positionnement (2) est formée avec une rainure de retenue (244'), chacune desdites secondes saillies arquées de ladite plaque annulaire (21) de chacun desdits plateaux de positionnement (2) étant formée avec une languette (251), ladite languette (251) de chacune desdites secondes saillies arquées de l'une desdites plaques annulaires (21) de chaque paire adjacente desdits plateaux de positionnement (2) mettant en prise ladite rainure de retenue (244') dans ladite partie d'extrémité libre (242) de la saillie respective desdites premières saillies arquées de l'autre desdites plaques annulaires (21) de chaque paire adjacente desdits plateaux de positionnement (2) lorsque lesdites plaques annulaires (21) de chaque paire adjacente desdits plateaux de positionnement (2) sont disposées à la seconde position relative.

6. Dispositif de filtrage selon la revendication 1, dans lequel ladite plaque annulaire (21) de chacun desdits plateaux de positionnement (2) a une surface supérieure et inférieure (211, 212) et est en outre formée avec des évidements annulaires supérieur et inférieur (28) indentés vers l'intérieur et respectivement à partir de ladite surface supérieure et inférieure (211, 212), ledit dispositif de filtrage comprenant en outre des bagues d'étanchéité supérieure et inférieure (3) qui sont respectivement disposées dans lesdits évidements annulaires supérieur et inférieur (28) dans ladite plaque annulaire (21) de chacun desdits plateaux de positionnement (2) et qui sont respectivement en contact d'étanchéité avec une paire adjacente desdites membranes (5).

7. Dispositif de filtrage selon la revendication 1, dans lequel chacune des deux membranes adjacentes desdites membranes (5) définit de manière coopérative un espace (22) entre elles, ledit dispositif de filtrage comprenant en outre une pluralité d'éléments d'agitation (6) dont chacun est disposé dans ledit espace (22) entre deux membranes adjacentes desdites membranes (5) et dont chacune a un moyeu (61) relié par manchon de manière rotative sur ladite plaque annulaire (21) d'un plateau respectif desdits plateaux de positionnement (2) et une pluralité d'aubes (62) s'étendant vers l'extérieur et de manière incurvée à partir dudit moyeu (61).
